(19) **Europäisches Patentamt**
**European Patent Office**
**Office européen des brevets**

(11) **EP 2 313 967 B1**

(12) **EUROPEAN PATENT SPECIFICATION**

(45) Date of publication and mention
of the grant of the patent:
**25.07.2012 Bulletin 2012/30**

(51) Int Cl.:
*H02P 25/08* [(2006.01)]   *H02P 6/16* [(2006.01)]
*G01D 5/20* [(2006.01)]

(21) Application number: **09779694.0**

(22) Date of filing: **10.06.2009**

(86) International application number:
**PCT/EP2009/057125**

(87) International publication number:
**WO 2010/006851 (21.01.2010 Gazette 2010/03)**

(54) **RESONANCE-BASED ROTOR POSITION ESTIMATION**

AUF RESONANZ BASIERENDE ROTORPOSITIONSSCHÄTZUNG

ESTIMATION DE POSITION DE ROTOR À BASE DE RÉSONANCE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **18.07.2008 GB 0813226**

(43) Date of publication of application:
**27.04.2011 Bulletin 2011/17**

(73) Proprietor: **Universiteit Gent
9000 Gent (BE)**

(72) Inventors:
• **GELDHOF, Kristof
B-9040 Gent (BE)**
• **VAN DEN BOSSCHE, Alex
B-9550 Herzele (BE)**

(74) Representative: **Wauters, Davy Erik Angelo et al
DenK iP bvba
Leuvensesteenweg 203
3190 Boortmeerbeek (BE)**

(56) References cited:
**DE-A1- 10 322 447     FR-A- 2 697 696
GB-A- 2 331 191     JP-A- 2000 083 393**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field of the invention

The present invention relates to the field of machinery such as for example electrical motors. More particularly, the present invention relates to the field of control and driving of machinery, such as for example salient electrical machines. The method and systems are applicable in a large number of fields, e.g. in advanced energy generation.

### Background of the invention

In order to control the motion states of a salient electrical machine in a stable manner it is required to measure the rotor position. This can be achieved by mounting mechanical devices such as encoders or resolvers on the shaft of the machine or by placing hall-sensors or search coils within the machine. Due to important temperature variations within the machine, as well as mechanical vibrations, these sensors can fail, consequently reducing the reliability of the controlled machine. For this reason, as well as to reduce cost and extra cabling, the motion states are estimated instead of measured.

A large number of rotor position estimation systems exist. A first exemplary set of position estimation methods makes use of an LC circuit, which consists of a position-dependent inductance L of an idle motor phase and a well-known external capacitor C. A high-frequency voltage is then applied to the motor phase by a capacitive or inductive coupling. The imposed frequency matches the resonant frequency of the LC circuit for a certain rotor position. When a moving rotor reaches this position, the complex value of the circuit impedance is characterised by a maximum amplitude and zero phase. Thus by tracking the amplitude or phase of the circuit impedance, it can be detected when the rotor reaches a predetermined position. Such a position estimation system or method requires an external excitation circuit.

Another exemplary category of position-estimation methods relies on the excitation of an idle motor phase with voltage pulses and the measurement of the resulting current slope. This slope is proportional to the incremental inductance of the phase and thus contains the rotor position information. These methods generate a disturbance torque due to the non-negligible amplitude of the current generated by the voltage pulses.

JP2000-083393 describes a system for detecting the position of a rotor by detecting the position of the rotor from a frequency value of a resonance frequency generated by an oscillating circuit.

DE10322447 describes a position measurement device for linearly or rotationally moving components based on a twin coil arrangement and an electrical oscillation circuit.

## Summary of the invention

It is an object of embodiments of the present invention to provide good apparatus or methods for controlling salient electrical machines. It is an advantage of embodiments according to the present invention that reliable estimation of the position of a rotor in a salient machine and/or reliable control of salient machines can be obtained. It is an advantage that the control system according to embodiments of the present invention is reliable, even in harsh environmental conditions, such as for example in the presence of dust, moisture, strong vibrations or high temperature. It thereby is an advantage that by using the sensorless method, malfunctioning of a mechanical shaft position sensor cannot give rise to inaccurate rotor position determination or inaccurate control of the salient machine.

It is an advantage of embodiments according to the present invention that a sensorless control system and/or method is provided for determining a rotor position in a salient machine, i.e. without the need for an external shaft position sensor. It is to be noticed that in the present invention, with sensorless there is meant without the need for a mechanical sensor.

The control methods and systems according to embodiments of the present invention may be applicable in a variety of fields, such as for example in consumer applications like in compressors, fans, air-conditioning, refrigerators, washing machines, automotive equipment, etc. but also in more advanced industrial applications such as handling equipment, winding machines, elevators, etc. and in electric and/or hybrid vehicles, etc. and in high-reliability applications such as aerospace applications.

It is an advantage of embodiments according to the present invention that information of the rotor position is obtained, not only for aligned positions of the rotor and stator, but also for intermediate positions. It thereby is an advantage that the systems and methods can be used for high-dynamic applications.

It is an advantage of embodiments according to the present invention that rotor position information can be obtained without the use of external excitation hardware. It is to be noticed that the system may use external excitation hardware, such as for example a simple analog circuit for generating periodic commands for the inverter to generate test pulses. It is also an advantage of embodiments according to the present invention that a relatively easy measurement circuit can be used, e.g. in comparison to a circuit for the measurement of a maximum impedance magnitude or of a zero impedance phase. It is an advantage of embodiments according to the present invention that no complex signal processing is required.

It is an advantage of embodiments according to the present invention that electromagnetic compatibility problems can be avoided, e.g. electromagnetic compatibility problems occurring upon injection of a sustained high frequency signal.

It is an advantage of embodiments that a high position resolution can be obtained. It is an advantage of embodiments according to the present invention that a large measurement signal can be evaluated, the system and/or method thereby being little subject to noise or disturbance.

It is an advantage of some embodiments according to the present invention that the amount of torque disturbance is negligible.

It is an advantage of embodiments according to the present invention that the number of components required for controlling salient electrical machines is low. The latter furthermore results in a reduction of costs.

The above objective is accomplished by the features of system claim 1 and corresponding method claim 10. The dependent claims recite advantageous embodiments and details of the invention.

**Brief description of the drawings**

FIG. 1 shows an example of a three-phase switched reluctance motor whereby the rotor is aligned with a pair of stator poles, as can be controlled using a method or system according to an embodiment of the present invention.

FIG. 2 shows an example of a three-phase switched reluctance motor whereby the rotor is not aligned with a pair of stator poles, as can be controlled using a method or system according to an embodiment of the present invention.

FIG. 3 shows an illustration of a (desired) phase current waveforms having a period of zero current for driving a three-phase switched reluctance motor (A) and a three-phase brushless DC motor (B), being one category of systems that can be controlled using a system and/or method according to an embodiment of the present invention.

FIG. 4 shows an exemplary setup for a system for estimating the rotor position according to an embodiment of the present invention.

FIG. 5 shows an example of a bridge of an asymmetric bridge converter as can be used in a system and/or method for controlling a switched reluctance motor according to an embodiment of the present invention.

FIG. 6A and FIG. 6B show an example of a controller output signal (FIG. 6A), a differential phase voltage response to the voltage test pulse in an idle phase for an aligned rotor position (dashed line) and for an unaligned rotor position (solid line) (FIG. 6B), as can be used in a method and/or system according to an embodiment of the present invention. In this example, the duration of the voltage test pulse is such that no significant amount of magnetic energy is stored in the phase winding inductance.

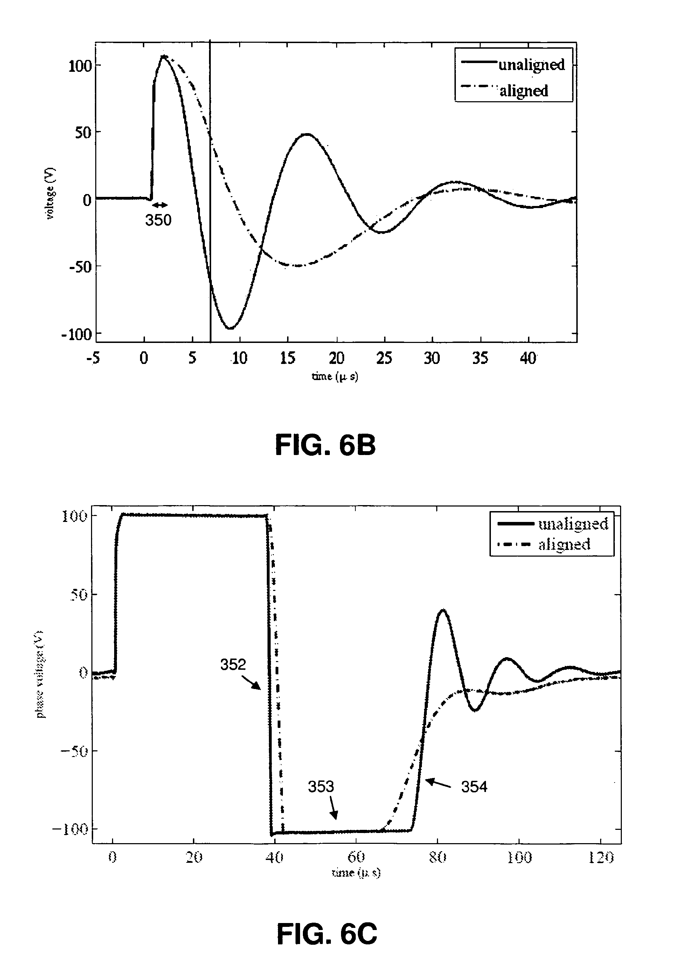

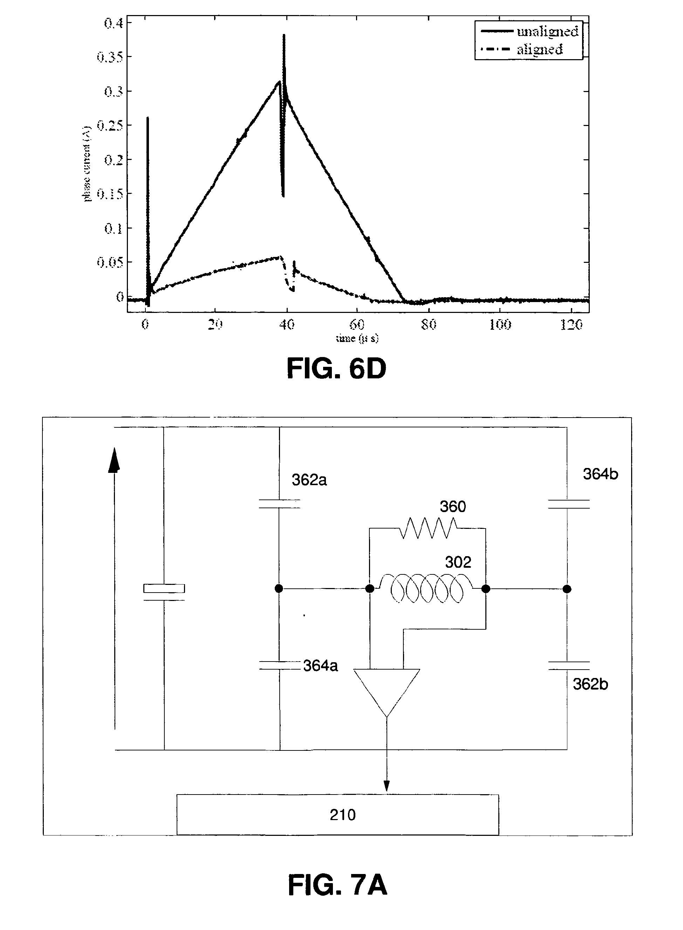

FIG. 6C and FIG. 6D show an example of the differential phase voltage response (FIG. 6C) and phase current response (FIG. 6D) to a voltage test pulse in an idle phase for an unaligned rotor position (dashed line) and for an aligned rotor position (solid line), as can be used in a method and/or system according to an embodiment of the present invention. The duration of the voltage test pulse is such that, at the end of the voltage test pulse, a substantial amount of magnetic energy is stored in the phase winding inductance, resulting in a period during which the freewheeling diodes are turned on.

FIG. 7A shows an example of a parasitic model for the inverter and motor phase, providing an insight in how a response to a voltage test pulse will behave. Fig. 7B shows an example of an external capacitive coupling between different phases of the inverter.

FIG. 8 illustrates a position signature comprised by differential voltage samples as a function of rotor position as can be used in a method and/or system according to an embodiment of the present invention.

FIG. 9 describes a flow chart for an exemplary method for controlling a salient machine and the calibration for the rotor position estimation, according to an embodiment of the present invention.

FIG. 10 describes a computing system as can be used for performing a method for controlling a salient machine according to an embodiment of the present invention.

FIG. 11 A and FIG. 11 B illustrates the differential phase voltage responses (FIG 11 B) for varying length of the voltage test pulses (FIG 11 A).

FIG 12 illustrates the damped resonance response in an idle phase as a function of the current in an aligned active phase, where both phases share a common magnetic path.

In the different figures, the same reference signs refer to the same or analogous elements.

**Description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may refer to it. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in the present reference is made to a salient machine, this term refers to machines where the self-inductance of a phase and/or the mutual inductance between phases depends on the rotor position. The latter may include machines with reluctance variation but also machines without reluctance variation, whereby saliency is for example induced by local saturation in any part of the stator or rotor, teeth, wedges, yoke, magnetic bridges, closed slots. A non-salient machine may be converted into a salient machine by constructional changes, e.g. by filling up an open stator or rotor slot with a bridge of saturable magnetic material so that a closed slot is obtained. Magnetic material (iron, laminations, iron powder, soft ferrite) can further be placed between some or all magnets of a non-salient permanent magnet machine in order to create a salient machine. The term salient machine encompasses machines with or without permanent magnet excitation. In a salient machine, a stator or rotor of the machine may comprise open or closed stator or rotor slots and windings of field coils may be placed within these slots. In salient machines, a reluctance variation along an air gap may exist as a result of construction or due to magnetic properties of the materials used within the machine.

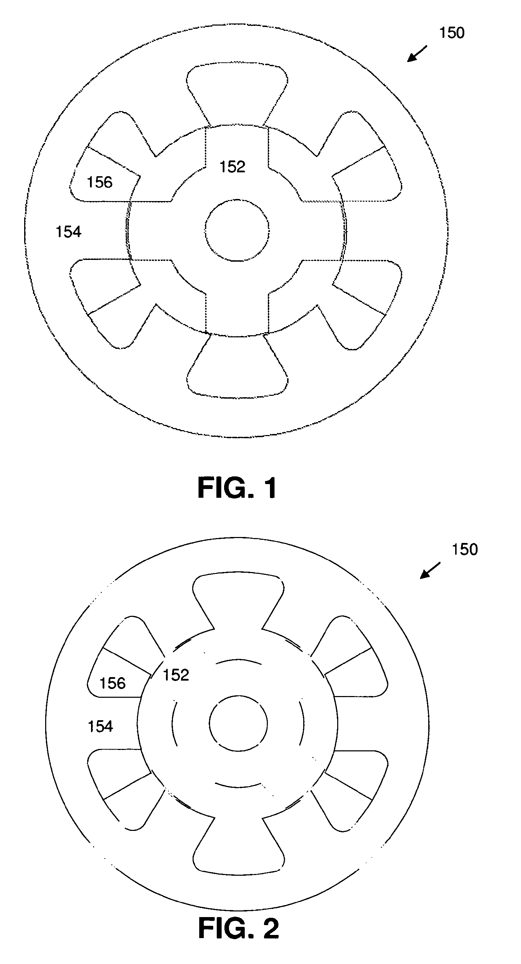

According to a first aspect, the present invention relates to a test system for a salient machine. Such a salient machine may be any type of salient machine, such as for example a generator, motor or any similar device allowing conversion between electrical and mechanical energy. By way of example, the present invention not being limited thereto, embodiments of the present invention will be illustrated for a 3-phase switched reluctance machine with six stator poles and four rotor poles. It is for example to be noticed that embodiments of the present invention also can be applied for salient machines having a different number of stator poles and/or a different number of rotor poles. For example, embodiments of the present invention may be applicable to salient machines having the same number of stator poles and rotor poles, a number of stator poles larger than the number of rotor poles or a number of stator poles smaller than the number of rotor poles, with stator and/or rotor poles evenly or not evenly distributed, with constant or progressive air gap under the stator or rotor poles, etc. The salient machine has at least one rotor and at least one stator whereby the relative position of the rotor with respect to the stator varies during operation of the salient machine. In FIG. 1, an example of a salient machine 150 being a three-phase switched reluctance motor with six stator poles 154 and four rotor poles 152 is shown, whereby a pair of rotor poles 152 is aligned with a pair of stator poles 154 . The phase A winding 156 of the three phases is shown. In FIG. 2, an example of non-alignment of the rotor 152 with the stator 154 is illustrated.

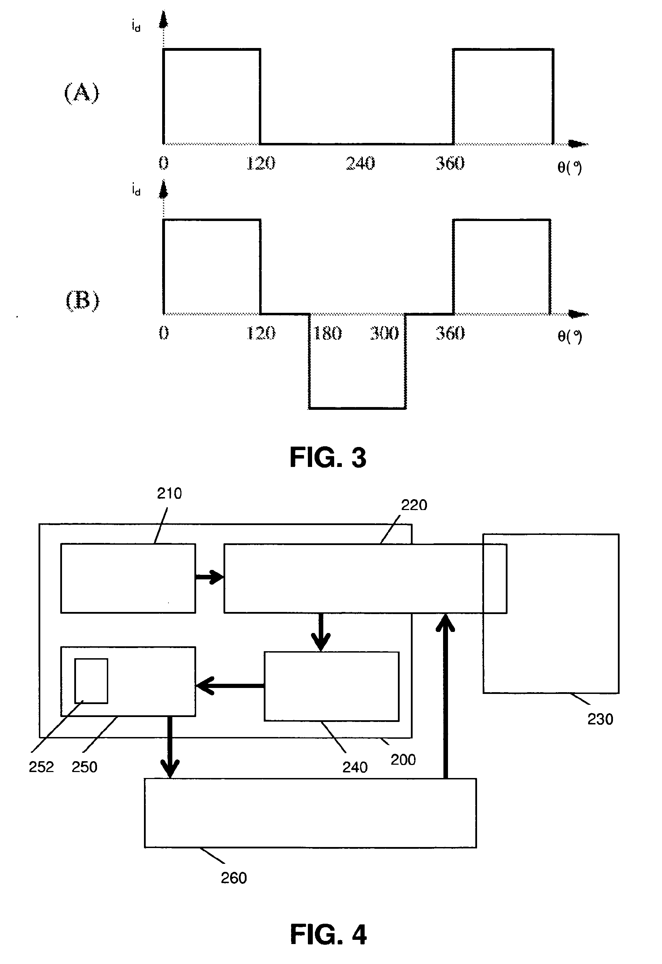

The present invention is for example suitable for use in electric motors. The salient machines according to some embodiments of the present invention may be driven in a way that, at every time instant, at least one of the phases is idle. It is an advantage of some embodiments of such machines that an accurate rotor position determination may be obtained using only a voltage measurement. By way of illustration, the present invention not being limited thereto, an example of a suitable electric drive signal, e.g. a phase current waveform with respect to the rotor position for a switched reluctance machine 150 which can be controlled using the test system according to embodiments of the present invention is shown in FIG. 3a. An example of a suitable phase current waveform with respect to the rotor position for a salient brushless DC machine which can be controlled using the test system according to embodiments of the present invention is shown in FIG. 3b. Alternatively, the methods and systems according to some embodiments of the present invention also may be applied for machines driven in a way that no idle phases occur. Such embodiments may benefit from additional measurements, e.g. of the current.

The test system according to embodiments of the present invention is adapted for generating a test pulse command for applying a voltage test pulse in a test phase of the salient machine 150, e.g. a salient brushless DC machine. In some embodiments, the test phase may be an idle phase. The length of the voltage test pulse thereby may be such that it falls completely within the period of the phase being idle. The test system may for example comprise a hardware or software test pulse command generator for generating a test pulse command. Such a test pulse command may be provided to an inverter. The test pulse command may be provided to the power electronic devices associated to the idle phase of the salient machine. Alternatively or in addition thereto, the test pulse command may be provided to the power electronic devices associated to another phase of the salient machine. The test pulse command may be adapted so as to apply a voltage test pulse during a period that the test phase is idle. Alternatively, the test phase is an active phase and the end of the voltage test pulse coincides with the transition of the phase from the active to the idle state. The test system may comprise the inverter, although the invention is not limited thereto. The test system furthermore comprises a measurement system for determining a damped resonance response to the voltage test pulse in a measured phase and a processor for deriving therefrom a position of a rotor 152 of the salient machine 150. Deriving therefrom a position of a rotor may comprise determining a damped resonance response signature value, also referred to as position signature value, and deriving from the damped resonance response signature value a position of a rotor of the salient machine. The latter provides the advantage of accurately providing a position of the rotor 152 with respect to at least one stator 154. It thereby is an advantage that the position of the rotor 152 can be determined, not only for particular alignments, but also for intermediate positions.

By way of illustration, the present invention not being limited thereto, an exemplary test system 200 is shown in FIG. 4, illustrating standard and optional components of the system 200.

The test system 200 is adapted for generating a test pulse command. In the present example, the system therefore may comprise a test pulse command generator 210 for generating a test pulse command. The test pulse command generator 210 may be adapted to provide on appropriate moments in time, a test pulse command for applying a voltage test pulse. Applying a voltage test pulse then may trigger a resonance response. The test pulse command generator 210 may be electrically connected to a voltage test pulse generator such as for example the inverter of the salient machine for applying the commanded voltage test pulse to the salient machine. In other words, the inverter may be used for generating the voltage test pulse in reply to the test pulse command. The inverter may be part of the test system 200 or may be electrically coupled to it. In some embodiments, for example when an active phase is used to apply the voltage test pulse, the test pulse command generator may be in the form of the conventional pulse generation unit present, such as a pulse width modulation generation unit.

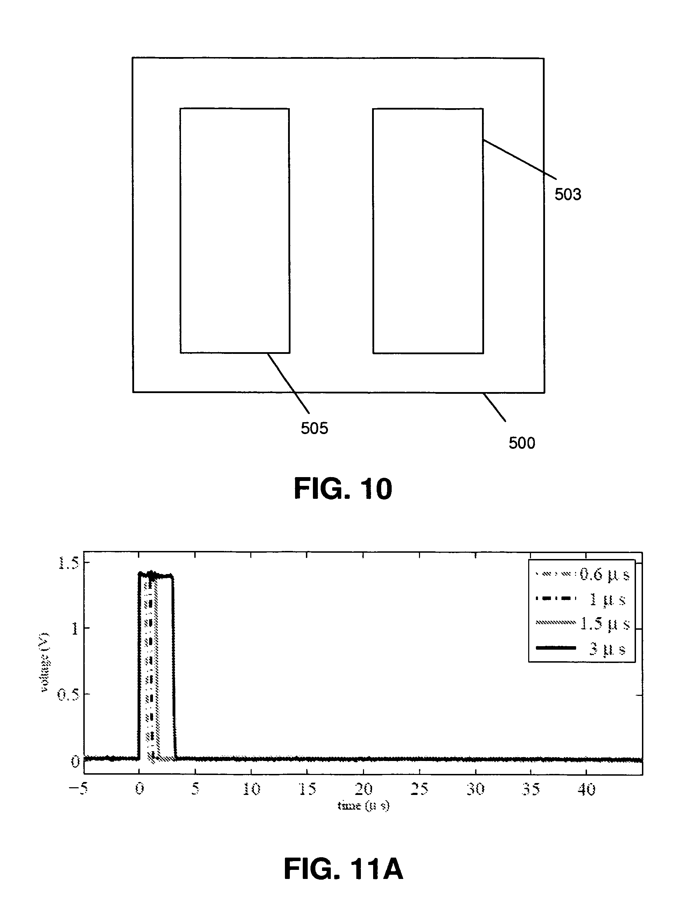

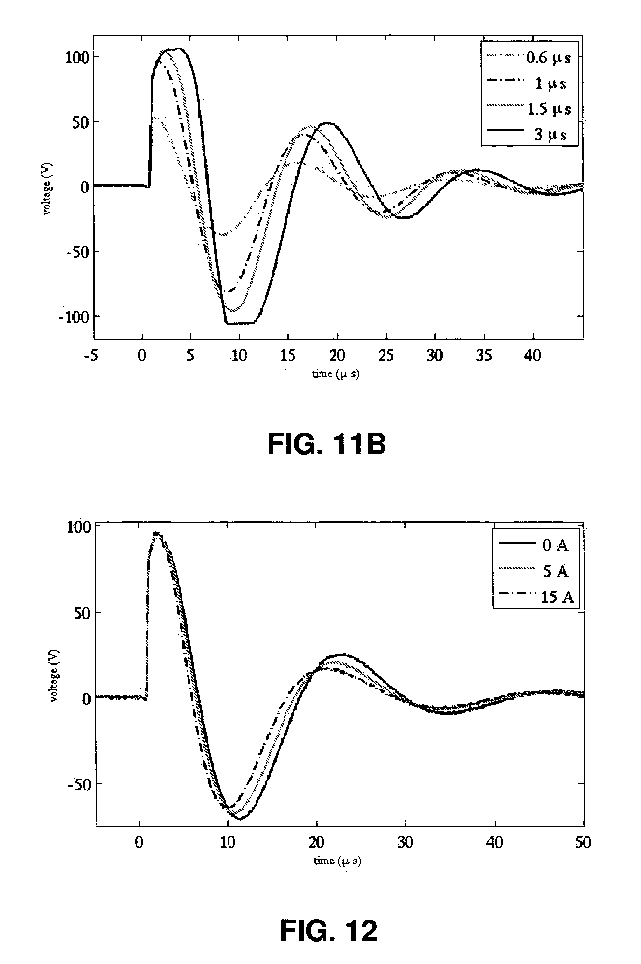

In advantageous embodiments, the length of the voltage test pulse preferably is such that a sufficiently large difference between the potentials of the test phase is generated. The idle phase may thereby constitute both the test phase and the measured phase. In one advantageous embodiment, the length of the voltage test pulse is such that the difference of the phase potentials reaches approximately the voltage level of the DC bus of the inverter or another fixed potential, in order to maximize the range of voltages during the damped resonance . The latter is also illustrated by way of example in FIG. 11 A and FIG. 11 B indicating a set of voltage test pulses in an idle phase and the damped resonance responses. The test pulse command generator 210 may be adapted for generating test pulse commands for generating voltage test pulses with a length of a few microseconds. The length of the voltage test pulse is short enough to limit the amount of current rise and thus to avoid the turn-on of freewheeling diodes at the end of the voltage test pulse. In one example, the length of the test pulse may vary between $0.5\mu s$ and $4\mu s$, the present invention not being limited to it. The amplitude of the voltage test pulse, i.e. the potential difference between the test phase terminals, may be determined by the DC bus voltage of the inverter. The test pulse command generator may be adapted, e.g. synchronised, to provide such a test pulse command to a voltage test pulse generator like the inverter so as to generate a voltage test pulse by any combination of switching actions of the power electronic devices associated to the idle phase, so that the terminal electric potentials of the test phase, e.g. the idle phase winding terminal electric potentials, are forced to predetermined potential levels, after which at least one of the terminal potentials is decoupled again from the potential value it was previously forced to. The voltage test pulse thereby is generated in an idle phase of the salient machine. More particularly, under normal operation of the motor, each phase conducts current during a given electrical period, e.g. 120° of a 360° electrical period. In the remaining period no current flows through the motor phase and voltage test pulses can be applied to the phase in this period. The effect of such a voltage test pulse, when applied by an inverter to the appropriate phase of the salient machine, is a resonance effect. At the end of the voltage test pulse, i.e. when at least one of the terminal potentials is decoupled, an energy exchange occurs between the motor phase inductance and an equivalent capacitance which is mainly determined by the parasitic capacitances of the inverter components, e.g. the power semiconductor devices of the inverter, as will be illustrated further below. As the motor phase inductance depends on the rotor position, the observed resonance frequency varies with the rotor position as well.

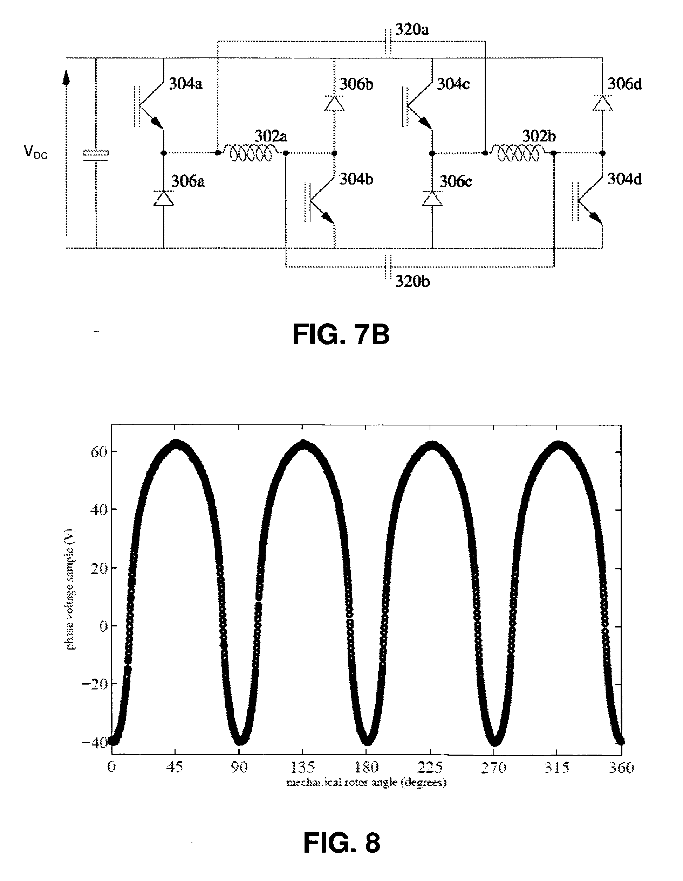

According to another particular embodiment of the present invention, the system may be adapted for generating a voltage test pulse in the idle phase by means of switching actions in another motor phase. This may be achieved by increasing the capacitive coupling between the motor phases by means of external capacitors, as will be described in more detail later with respect to Fig. 7b. The value of the coupling capacitors, illustrated in Fig. 7b by coupling capacitors 320a and 320b, may be several times larger than the parasitic capacitances of the power semiconductor devices. The electric potentials of the idle phase winding terminals, indicated in Fig. 7b by the terminals of winding 302a, may therefore be forced to the upper and lower DC bus potential when switching the other phase, indicated in Fig. 7b by 302b, on. The (parasitic) capacitance of the idle phase may be charged to the DC bus voltage and may start resonating with the idle phase winding inductance The parasitic capacitance associated with the phase may comprise all capacitances, i.e. not only phase winding and semiconductor capacitance but also cable capacitance, board layout capacitance, external capacitance, etc.

According to a particular embodiment of the present invention, the system may be adapted as such that the capacitors 362 and 364 in Fig. 7a are the parallel connection of explicit capacitors and the parasitic capacitors of the power semiconductor devices. This may be done in order to decrease the range of resonance frequencies. The external capacitors may further be chosen sufficiently large so that their capacitance dominates the parasitic capacitance of the power semiconductor devices.

In another embodiment, an active phase constitutes both the test phase and the measured phase. In this case, a substantial current is present at the end of the voltage test pulse. The latter has as an effect that besides energy stored in the capacitance, also additional magnetic energy is stored in the inductance, influencing the resonance response. Nevertheless, still a damped resonance response occurs at the end of the voltage test pulse. This damped resonance response may be interrupted by a new voltage test pulse, forcing the potentials of the measured phase, e.g. due to the conduction of freewheeling diodes. Position estimation may for example be based on the damped resonance response before the new voltage test pulse is applied or on the damped resonance response after the end of the new voltage test pulse, when the current has decreased again to substantially zero. For obtaining accurate position estimation it is often advantageous in these embodiments that the current is taken into account and therefore a current measurement may be advantageous. These embodiments may be especially suitable for salient machines not having idle phases. The latter will further be illustrated in a particular example, the principles of embodiments of the invention not being limited thereby.

In still another embodiment, the rate at which voltage test pulses are applied, is varied, in order to obtain a higher or lower position estimation update rate. At higher speeds of the machine, the rate of applying test pulses may be chosen higher, in order to reduce the influence of hysteresis in the magnetic core of the machine on the damped resonance response.

The voltage test pulse generator 220 may be part of the test system 200 and more particularly the test pulse command generator may be electrically coupled thereto. The voltage test pulse generator 220 may in embodiments of the present invention advantageously be the inverter of the salient machine, although the invention is not limited thereto. The voltage test pulse generator 220 may for example also be a power electronic device which differs from the inverter driving the main machine: In one example, a position sensor may be implemented as a small salient machine, that may be mounted on the shaft of a main machine to be driven, whereby the voltage test pulse generator thus differs from the inverter driving the main machine. The voltage test pulse generator 220 may be any power-electronic converter, such as for example any power-electronic converter adapted for driving the salient machine, e.g. the switched reluctance motor or the salient brushless DC motor. The voltage test pulse generator 220 may comprise a set of power semiconductor devices, e.g. three-terminal power semiconductor devices, for applying a drive signal. The power semiconductor devices may for example be transistors. The power semiconductor devices may be adapted for fast switching. In one particular example, the power semiconductor devices may be insulated-gate bipolar transistors. When a phase of the salient machine 230 is coupled to the inverter of the salient machine, voltage test pulses can be applied to the salient machine.

The test system furthermore comprises a measurement circuit 240 for determining, in a measured phase, a damped resonance response to the voltage test pulse in a test phase. The measurement circuit may or may not contain high-pass or low-pass filters or a combination of both. The measurement circuit may provide information regarding the damped resonance response to the voltage test pulse applied. The measurement circuit 240 alternatively or in addition thereto may comprise a processing means for determining a position signature value from a damped resonance response. The position signature value may be any suitable parameter identifying a damped resonance response induced by the voltage test pulse. The position signature value is representative for the damped resonance response to the voltage test pulse. The position signature value may be representative for the degree of damping as well as for the frequency of the resonance. The position signature value may be obtained by performing a single sampling of the damped resonance response, e.g. on a predetermined time after the voltage test pulse has been applied, i.e. at a predetermined time instant after the test pulse command has been sent or after the end of the voltage test pulse. In a particular example, the measurement circuit is a means for determining a position signature value using the induced voltage over the measured phase. The measured phase can be the test phase or another motor phase or a sensing coil, inductively coupled with the test phase.

Determining the position signature value may comprise determining a resonance characteristic, such as for example a damping factor characterising the damping of the resonance response. The latter may be performed based on a fit of a damped oscillation, based on a look-up table or by calculation. Alternatively, the step of explicitly determining a resonance characteristic may be avoided and the position signature value may be based on the determined sampling points representative for the damped resonance response.

In a particular embodiment of the present invention, at least two induced voltage samples may be measured for determining the position signature value of the damped resonance response induced by the voltage test pulse. The latter allows for example the elimination of disturbing effects that originate from mutual coupling and back electromotive force. In the presence of this back electromotive force, a voltage test pulse is applied to the idle phase wherein already a voltage is present induced by both the mutual coupling with an active phase and the well-known principle of induced emf due to the rotation (back electromotive force). In that case the voltage response is comprised out of both the induced voltage and the damped resonance response to the applied voltage test pulse. In some cases it may be possible to measure the induced voltage before application of the voltage test pulse (first sample), and subtract this result from the measured response to the voltage test pulse (second sample).

According to a particular embodiment of the present invention, the application of voltage test pulses, the detection of the damped resonance response and the switching actions for driving the salient machine may be synchronised. The timing of the voltage test pulses may be chosen in such a way that the time instants at which measurements of the damped resonance response are performed do not coincide with switching actions of the power electronic devices in an active phase of the machine. The latter prevents measuring disturbances due to capacitive coupling between active phases and the measurement phase.

According to particular embodiments of the present invention, the system furthermore is adapted for performing a current measurement. The latter may for example be performed in embodiments where the voltage test pulse is applied in an active phase. It may also be performed in embodiments where saturation occurs in a common magnetic path between the measured phase and an active phase. Fig. 12 shows the influence of the current level in an aligned active phase on the damped resonance response in the measured phase. At high current levels, the common magnetic path between both phases may saturate, leading to a decrease in inductance of the measured phase. It may be advantageous to measure the current in the active phase, in order to compensate for the change in permeability in the common path between the measured phase and the active phase. Such a current measurement may be performed using a system as known from prior art.

The test system furthermore may comprise a processor 250 adapted for deriving, from the determined position signature value associated with the damped resonance response to the voltage test pulse, a position of a rotor of the salient machine. The latter may for example be based on a predetermined algorithm, by use of a look-up table, according to predetermined rules, by calculation or by using a neural network. The processing may be performed in a single processor or may be performed in different processors. In FIG. 4, a separate processor 250 is shown. The processor or the plurality of processors may be any suitable processing means such as for example a microprocessor, a micro-computer, an FPGA, a logic array, etc. In one embodiment, the processor 250 may comprise a memory 252 for storing a predetermined relationship between a position signature value and the position of the rotor, a look-up table determined during a calibration method providing a relationship between a position signature value and a position of the rotor, etc. The latter may for example comprise determining a relationship between the measured voltage and the rotor position during a calibration phase by repeating measurement of the voltage for different known rotor positions and storing such a relationship in the processor 250. This relationship then can be used to retrieve the rotor position at any time for the given configuration. As an example of such a calibration procedure, one phase of the (unloaded) salient machine may be switched on so that the rotor tends to align with the phase. If the phase is switched off shortly before final alignment has been reached, the rotor will keep rotating at a speed which decreases only slightly in one electrical revolution due to friction torque. During the electrical revolution the speed is more or less constant and the position signature values can be measured and stored for use under normal operating conditions. Such a calibration procedure advantageously takes place under no-load conditions, where no current is present in the phase windings. The position signature, comprising all position signature values associated with a range of rotor positions, advantageously is recorded for the case of voltage test pulses applied to idle phases of the salient machine. As the position signature depends on the motor phase inductance and the parasitic capacitance of motor phase, power semiconductor devices, converter layout and cabling, the position signature has to be recorded again each time the converter or motor or cabling is changed. In some embodiments according to the present invention, the need to record the position signature again in case of a change of converter or cabling is overcome if external capacitors are placed in parallel with the power semiconductor devices. If the capacitor value is sufficiently larger than the total parasitic capacitance associated with the phase, the range of resonance frequencies is determined by the external capacitor value, rather than the parasitic capacitance. When the motor is replaced, the position signature needs to be recorded again anyway. This can be done for example as described before. In some examples, besides a measured voltage, also a measured current is to be taken into account, e.g. in embodiments where the voltage test pulse is applied while, at least during part of the application of the pulse, a substantially non-zero current is present. The latter will be described in more detail using a particular example, the present invention not being limited thereto. In yet other examples, a measured current is to be taken into account, e.g. in the case of saturation of common magnetic paths between the measured phase and an active phase. It that case an additional calibration procedure may be advantageously undertaken in order to calibrate the impact of a saturated common magnetic path. This calibration procedure can e.g. record the impact on the position signature value for different levels of saturation by applying different levels of current in an active phase to generate different levels of saturation while observing the impact on the damped resonance response in the measured phase.

The test system optionally furthermore may comprise a controller 260 for controlling the driving of the salient machine. In this way, in reply to the obtained rotor position, the control of the salient machine can be adjusted. The controller 260 may perform the function of selecting the appropriate control strategy and/or performing the control, based on the obtained rotor position in the salient machine. Selection of the control strategy thereby may depend on the position, speed or torque of the salient machine. The controller 260 thus may be adapted for using the derived information regarding the rotor position to control the salient machine. The input provided to the controller may be the rotor position determined in the processor. Furthermore, the controller 260 may have as an input the desired torque or speed, which may be information obtained via a user input. Control of a salient machine can be performed in an automated and/or automatic way. It may for example be performed in agreement with predetermined algorithms or based on neural network processing. For example, based on a determined operational state of the salient machine, e.g. derived from a rotor position or rotor angle, the controller may decide to perform commutation between phases of the salient machine, to increase the speed or torque of the salient machine, to decrease the speed or torque of the salient machine, to switch over to a safety procedure, for example stopping the operation of the salient machine, etc. In some embodiments, control of the salient machine may be performed in a self-regulating way, whereby increase of the speed or torque of the salient machine is coupled to the amount of disturbance measured. Increasing the speed or torque may for example be performed once a given degree of stability, e.g. in view of a predetermined level of stability to be obtained, is reached. Control of the salient machine may be performed upon request of a user, at regular time, continuously or nearly continuously, at predetermined moments in time, according to a programmed time schedule, etc.

It is an advantage of embodiments according to the present invention that it allows obtaining a rotor position at a good resolution. In a particular embodiment, the power inverter of the salient machine may be further adapted to change the range of resonant frequencies so that a further enhanced resolution for the rotor position estimation can be obtained. In order to obtain this external capacitors may be added to the inverter. External capacitor values of up to 100 times the parasitic capacitance value of a power semiconductor device may be used for this purpose.

In a particular embodiment, the system furthermore is adapted for providing a rotor position estimation at high rotation speed. At high speeds the change in rotor position between consecutive voltage measurements will not be negligible. In order to also provide information regarding the rotor position at high speeds, the system may be adapted with conventional high-speed operation sensorless strategies, such as for example sensorless strategies based on measuring the active phase current waveform.

In a second aspect the present invention also relates to an assembly of the salient machine and a test system as described in the first aspect. The system thereby may comprise the same features and similar advantages as described in the first aspect of the present invention.

By way of illustration, the present invention not being limited thereto, an example of an assembly of a salient machine and a test system according to embodiments of the first aspect and of the second aspect are described below.

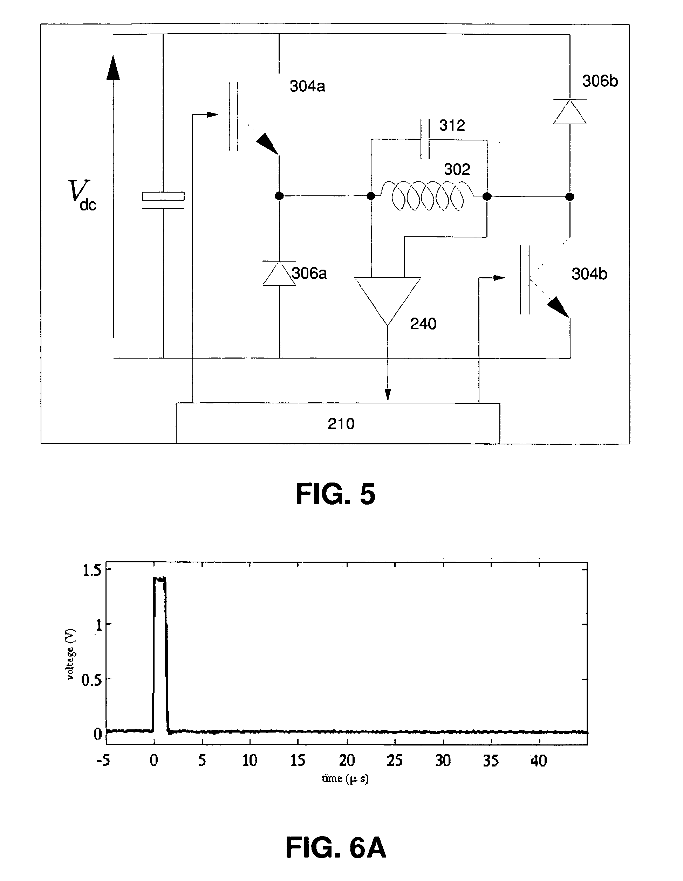

In the present example, a 3-phase switched reluctance machine with six stator poles and four rotor poles (6/4 SRM) having a rotor and stator configuration for which two examples (aligned and non-aligned) are illustrated in FIG. 1 and FIG. 2. The phase A winding 156 of the machine is connected to a bridge of an asymmetric H-bridge converter, as can be seen in FIG. 5. Component 302 represents the inductance of the phase A winding. In the present example, each bridge of the converter contains a pair of insulated gate bipolar transistors (IGBTs) 304a, 304b and a pair of freewheeling diodes 306a, 306b. It is to be noticed that different types of converters, i.e. inverters, also may be used. A test pulse command generator, also referred to as a controller circuit 210, calculates the signals to be provided to the power semiconductor devices. More particularly in the present example, the test pulse command generator calculates the gate signals for the IGBTs associated to the idle phase A. The inverter also is adapted for receiving measurements of the differential phase winding voltage of phase A. In order to apply the voltage test pulses in the idle phase, both IGBTs are simultaneously switched on for a very short amount of time, typically a few microseconds.

FIG. 6A and FIG. 6B illustrate the damped resonance waveforms for the differential voltage of the phase A winding. FIG. 6A shows the controller output signal for both IGBTs. There is a small delay, mainly caused by the switch-on delay of the IGBTs, before the IGBTs switch on. When the IGBTs are switched on, approximately 1 microsecond after the turn-on command issued from the controller, the electric potentials of the phase winding terminals are forced to the upper and lower potential of the DC bus. In this way, the parasitic capacitance 312 of the phase winding is charged up to the converter DC bus voltage $V_{DC}$. The charging of the phase winding takes place in the time interval 350 in FIG. 6B. Consecutively, the IGBTs are switched off simultaneously. From that moment on, the dynamic behaviour of the IGBTs is mainly determined by the parasitic collector-emitter capacitance 362a and 362b, as can be seen from the parasitic model for the inverter and motor in FIG. 7A. Fig. 7A thereby provides an insight in how a response to a voltage test pulse will behave. The response will be a resonance, due to the energy exchange between the inductive element 302 and an equivalent capacitance comprised by the capacitive elements 362, 364 associated with the semiconductor devices (including external capacitors, if present, placed in parallel with these devices) and the parasitic capacitance 312 of the phase winding, power cables, printed board circuit layout and other parasitic capacitances present in the circuit. The resistor R 360 models the core losses in the machine. Due to these losses, the resonance is damped.

Fig. 7B shows an example of an external capacitive coupling between different phases of the inverter. If the value of the external capacitors 320a and 320b is much larger than the parasitic capacitances in the circuit, the electric potentials of the terminals of the idle phase winding 302a are forced to the upper and lower potential of the DC bus when IGBTs 304c and 304d are switched on. Therefore, with this configuration, the switching actions of an active phase can trigger a resonance in the idle phase, i.e. the measured phase.

The differential phase voltage response is shown for the unaligned rotor position (FIG. 6B, solid line) and for the aligned rotor position (FIG. 6B, dashed line). If the parasitic capacitance of the IGBTs and freewheeling diodes would have a constant value and if no damping were present, the voltage would oscillate with amplitude $V_{DC}$ at a resonance frequency determined by

$$\frac{1}{2\pi\sqrt{LC_{eq}}}.$$

In this formula L represents the position-dependent motor phase inductance and $C_{eq}$ represents the equivalent capacitance of the resonant circuit. As the parasitic capacitance of the IGBTs and freewheeling diodes is both voltage and temperature dependent, the equivalent capacitance is not constant during the oscillation. Furthermore the oscillation is damped. This damping is mainly caused by eddy current and hysteresis losses in the magnetic core of the machine, the effect of which can be represented by a resistor 360 in parallel with the phase winding inductance 302. The damping is most important when the rotor is in the aligned position, i.e. similar as shown in FIG. 1, which corresponds to a minimum air gap width.

It can be seen from FIG. 6B that the damped oscillation of the phase voltage shows a strong position dependence. Moreover, the amplitude of the voltage is of the same order of magnitude as the DC bus voltage magnitude. High-resolution rotor position information can thus be retrieved from the oscillating phase voltage. In FIG. 6B a sample of the oscillating voltage is taken at a fixed time $t_s$ after the end of every voltage test pulse. This time is chosen so that, in the unaligned rotor position, the oscillating voltage reaches its minimum value near the sample instant. The sample value is indicated by the vertical line in FIG. 6B. If consecutive sample values are plotted as a function of rotor position for one mechanical revolution of the machine, FIG. 8 is obtained. FIG. 8 thereby shows a position signature, comprising a range of position signature values, e.g. differential voltage samples, for a corresponding range of rotor positions, for the combination of machine and converter.

FIG. 6C and FIG 6D show two examples of embodiments in which the voltage test pulses, applied to an idle phase, may result in a substantial buildup of current in the phase. In FIG. 6C and FIG. 6D the differential voltage (FIG. 6C) and current (FIG. 6D) of the switched reluctance motor phase are shown for the unaligned (solid line) and the aligned (dashed line) rotor position respectively. During the voltage test pulse the parasitic capacitance of the phase winding is charged up to the DC bus voltage. Moreover, the current in the phase winding may increase to a substantial level during the application of the voltage test pulse. Due to the extra amount of magnetic energy

$$E_{additional} = \frac{1}{2} Li^2$$

stored in the inductance at the end of the voltage test pulse, the consecutive differential voltage resonance may drop below the negative DC bus voltage and the freewheeling diodes may turn on as a consequence. The arrow 353 indicates the area in the voltage response wherein the freewheeling diodes are conductive. The arrow 352 indicates the occurrence of the first resonance from which the position could be estimated. However, an additional measurement may be necessary, e.g. a current measurement, as the steepness of the waveform strongly increases with increasing initial energy stored in the magnetic field. An additional measurement may not be necessary if the current does not reach a substantial level during the application of the voltage test pulse. This is the case when the energy stored in the parasitic winding capacitance

$$E_{capaci\tan ce} = \frac{1}{2} CV^2$$

strongly dominates the magnetic energy stored in the winding inductance

$$E_{additional} = \frac{1}{2} Li^2 .$$

Another voltage test pulse is generated as the freewheeling diodes are turned on, indicated by the arrow 353. With the freewheeling diodes switched on, the electric potentials of the phase winding terminals are forced to the DC bus potentials. As the applied voltage over the phase equals the negative DC bus voltage, the current rapidly decreases. When the current reaches zero, the freewheeling diodes turn off and both potentials of the phase winding terminals are decoupled from the DC bus, again inducing a resonance. The arrow 354 refers to the occurrence of a second damped resonance on which a position estimation could be based. However, also here an additional measurement may be necessary, e.g. the time at which the freewheeling diodes turn off. These embodiments may not be preferred for the switched reluctance motor or salient brushless DC machines. However, measurement of the first resonance may be used in other salient machines which are characterized by the fact that they are driven without periods of zero current.

A third aspect of the present invention relates to a method for determining a rotor position of a salient machine and optionally for controlling the salient machine as function of the obtained rotor position. The method advantageously may be performed using a system as described in the first and/or the second aspect, although the invention is not limited thereto. The method for determining a rotor position comprises generating a test pulse command for applying a voltage test pulse, determining in a measured phase a damped resonance response to the voltage test pulse and deriving therefrom a position of the rotor. Deriving a position of the rotor from a damped resonance response may comprise deriving a position of the rotor from the obtained damped resonance response signature value, also referred to as the position signature value. The damped resonance response signature value, also referred to as the position signature value, may be determined based on the damped resonance response. The test pulse command may be adapted for generating a voltage test pulse in an idle phase of the salient machine, although the invention is not limited thereto as set out above.

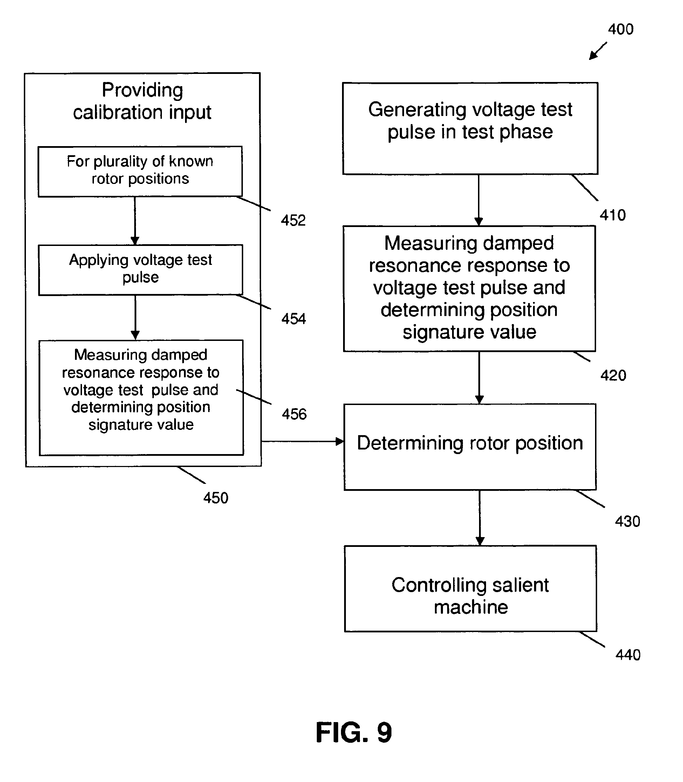

By way of illustration, the present invention not being limited thereto, an exemplary method for determining a rotor position, and in the present example further controlling based thereon a salient machine, is described with reference to FIG. 9. The exemplary method 400 illustrates standard and optional steps according to an embodiment of the present invention.

In a first step 410, generating a test pulse command is performed for applying a voltage test pulse in a test phase of the machine. The voltage test pulse may be as described in the first or the second aspect. Generating a voltage test pulse may comprise the forcing of the potentials of the test phase by switching actions of the inverter in this phase or switching actions in a phase or excitation circuit, the terminals of which are capacitively coupled with the terminals of the test phase..

In a second step 420, a damped resonance response to the voltage test pulse may be measured in a measured phase. The measured phase can also be a sensing coil. An electrical parameter may be measured, which is preferably a voltage signal, although other electrical parameters also can be used, such as the current or the time-derivative of the current in the measured phase. If the voltage test pulse is applied to a phase in which a substantial current flows at the end of the voltage test pulse, an additional measurement of an electrical parameter may be required, e.g. the current at the end of the voltage test pulse or the turn-off time of freewheeling diodes.

As set out above, the position of the rotor with respect to the stator of the salient machine will influence the damped resonance response to the voltage test pulse. From the damped resonance response a damped resonance response signature value, also referred to as position signature value, may be determined. Determining the position signature value may be based on one, two or more samples of the damped resonance response, the invention not being limited thereto. These samples are representative of a position signature value. In some embodiments according to the present invention, also a current measurement may be performed, i.e. for example if the voltage test pulse is applied in an active phase or in the case of saturation of a common magnetic path between the measured phase and an active phase.

A third step 430 comprises deriving a rotor position based on the damped resonance response or more particularly on the position signature value obtained therefrom. The latter may be based on calculation or comparison with predetermined calibration values, such as for example based on the use of a look-up table, based on a predetermined algorithm, based on a neural network, etc. Such calculation or predetermined calibration values may express a relationship between the rotor position with respect to the stator of the salient machine. The latter results in determination of the position of a rotor. For this derivation of the rotor position, in some embodiments results of an additional current measurement also may be taken into account

In step 440 this result may be used to control the driving of the salient machine. In other words, from the output of step 430, control of the salient machine may be adapted such as for example selecting the appropriate control strategy and/or performing the control, based on the obtained rotor position in the salient machine. It may for example be decided to perform commutation between phases of the salient machine, to increase the speed or torque of the salient machine, to decrease the speed or torque of the salient machine, to switch over to a safety procedure, for example stopping the operation of the salient machine, etc. Further features of this step may be performed according to the functionality of the components described in the first aspect.

For deriving a rotor position based on the obtained damped resonance response, calibration between the rotor position and a position signature value obtained from a damped resonance response to a voltage test pulse advantageously is performed. The latter is illustrated by a separate step 450 comprising provision of the calibration input. The present invention thereby in a further aspect also relates to a method for determining a correlation between a position signature value obtained from a damped resonance response in response to a voltage test pulse and a rotor position. Such a method comprises, for a plurality of predetermined and known or measured positions of the rotor with respect to the stator 452, applying a voltage test pulse 454 and determining a position signature value 456 for the predetermined position of the rotor. Again such position signature value may be obtained by one, two or more sampling values or a property determined based thereon. The calibration method thereafter may comprise providing a look-up table indicating the rotor position as function of a damped resonance response signature value or a position signature value obtained from a damped resonance response, a determined mathematical relationship between the damped resonance response signature value or a position signature value obtained from the damped resonance response and the rotor position, or the like.

The above described method embodiments for controlling a salient machine may be at least partly implemented in a processing system 500 such as shown in Fig. 10. Fig. 10 shows one configuration of a processing system 500 that includes at least one programmable processor 503 coupled to a memory subsystem 505 that includes at least one form of memory, e.g., RAM, ROM, and so forth. It is to be noted that the processor 503 or processors may be a general purpose, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. For example, the determination of test pulse properties and/or the determination of the damped resonance response, and/or the determination of a position signature value from a damped resonance response and/or the determination of a rotor position from a position signature value may be a computer implemented step. Thus, while a processing system 500 such as shown in Fig. 10 is prior art, a system that includes the instructions to implement aspects of the methods for controlling a salient machine or for deriving a rotor position in a salient machine is not prior art, and therefore Fig. 10 is not labelled as prior art.

The present invention also includes a computer program product which provides the functionality of any of the methods according to the present invention when executed on a computing device. Such computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

It is to be understood that although preferred embodiments, specific constructions and configurations, as well as materials, have been discussed herein for devices according to the present invention, various changes or modifications in form and detail may be made without departing from the scope of this invention as defined by the appended claims. For example, any formulas given above are merely representative of procedures that may be used. Functionality may be added or deleted from the block diagrams and operations may be interchanged among functional blocks. Steps may be added or deleted to methods described within the scope of the present invention.

**Claims**

1. A test system (200) for a salient machine (230), the test system (200) being adapted for generating a test pulse command for applying a voltage test pulse to a phase winding of the machine (230), the test system comprising
a measurement circuit (240) adapted for determining a damped resonance response following the end of the voltage test pulse at which moment at least one terminal of a phase winding of the machine is decoupled, and
a processor (250) adapted for deriving therefrom a position of a rotor of the salient machine (230)
wherein the measurement circuit is adapted for determining the influence of the energy exchange between a salient machine inductance and a parasitic capacitance (312) of salient machine and voltage test pulse generator components on the damped resonance response.

2. A test system (200) according to the previous claim, wherein the test system comprises a test pulse command generator (210) for generating a test pulse command for applying a voltage test pulse to forcing potentials of a phase winding of the machine (230) to predetermined levels, the test system further comprising a voltage test pulse generator for generating the voltage test pulse.

3. A test system (200) according to claim 2, the voltage test pulse generator comprising an inverter for driving the salient machine, whereby the switching actions of the inverter driving the salient machine are generating the voltage test pulses.

4. A test system (200) according to any of the previous claims, wherein potentials in the test system are decoupled at the end of the voltage test pulse to initiate the damped resonance response to the test pulse.

5. A test system (200) according to any of the previous claims, wherein the measurement circuit is adapted for determining a damped resonance response following the end of the voltage test pulse in the electric drive signal.

6. A test system (200) according to any of the previous claims, wherein the processor (250) is adapted for deriving a position signature value from the damped resonance response.

7. A test system (200) according to any of the previous claims furthermore comprising a controller (260) for controlling driving of the salient machine as function of the derived rotor position.

8. A salient machine comprising a test unit according to any of claims 1 to 7.

9. Use of a test system (200) according to any of claims 1 to 7 in a salient machine.

10. A method (400) for determining a rotor position in a salient machine, the method comprising

- generating (410) a test pulse command for applying a voltage test pulse to a phase winding of the machine,
- determining (420) a damped resonance response following the end of the voltage test pulse at which moment at least one terminal of a phase winding of the machine is decoupled taking into account the influence of the energy exchange between a salient machine inductance and a parasitic capacitance (312) of salient machine and voltage test pulse generator components on the damped resonance response., and
- deriving (430) from the damped resonance response a position of a rotor of the salient machine.

11. A method (400) according to claim 10, wherein deriving a position of a rotor comprises

- determining a position signature value from the damped resonance response and

- deriving a position of the rotor from the position signature value.

12. A method for calibrating a system according to any of claims 1 to 7, the method comprising for a plurality of rotor positions (452),

- generating (454) a test pulse command for applying a voltage test pulse to a phase winding of the machine,
- determining (454) a damped resonance response following the end of the voltage test pulse at which moment at least one terminal of a phase winding of the machine is decoupled, and deriving a relationship between the damped resonance response and the known rotor position.

13. A method according to claim 12, wherein deriving a relationship comprises

- determining a position signature value from the damped resonance response and
- deriving a relationship between the position signature value and the known rotor position.

14. A computer program product for, when executing on a computer, performing a method according to any of claims 10 to 13.

**Patentansprüche**

1. Testsystem (200) für eine Schenkelmaschine (230), wobei das Testsystem (200) dafür ausgelegt ist, einen Testimpulsbefehl zu erzeugen, um einen Spannungstestimpuls an eine Phasenwicklung der Maschine (230) anzulegen, wobei das Testsystem Folgendes umfasst:

eine Messschaltung (240), die dafür ausgelegt ist, ein gedämpftes Resonanzansprechverhalten nach dem Ende des Spannungstestimpulses, wobei in diesem Moment mindestens ein Anschluss einer Phasenwicklung der Maschine entkoppelt wird, zu bestimmen, und einen Prozessor (250), der dafür ausgelegt ist, daraus eine Position eines Rotors der Schenkelmaschine (230) abzuleiten, wobei die Messschaltung dafür ausgelegt ist, den Einfluss des Energieaustauschs zwischen einer Schenkelmaschineninduktivität und einer parasitären Kapazität (312) der Schenkelmaschine und Spannungstestimpuls-Generatorkomponenten auf das gedämpfte Resonanzansprechverhalten zu bestimmen.

2. Testsystem (200) nach dem vorhergehenden Anspruch, wobei das Testsystem einen Testimpuls-Befehlsgenerator (210) zum Erzeugen eines Testimpulsbefehls umfasst, um einen Spannungstestimpuls zum Zwingen von Potentialen einer Phasenwicklung der Maschine (230) auf vorbestimmte Werte anzulegen, wobei das Testsystem ferner einen Spannungstestimpulsgenerator zum Erzeugen des Spannungstestimpulses umfasst.

3. Testsystem (200) nach Anspruch 2, wobei der Spannungstestimpulsgenerator einen Umrichter zum Ansteuern der Schenkelmaschine umfasst, wodurch die Schaltaktionen des Umrichters, der die Schenkelmaschine ansteuert, die Spannungstestimpulse erzeugen.

4. Testsystem (200) nach einem der vorhergehenden Ansprüche, wobei Potentiale in dem Testsystem am Ende des Spannungstestimpulses entkoppelt werden, um das gedämpfte Resonanzansprechverhalten auf den Testimpuls einzuleiten.

5. Testsystem (200) nach einem der vorhergehenden Ansprüche, wobei die Messschaltung dafür ausgelegt ist, ein gedämpftes Resonanzansprechverhalten nach dem Ende des Spannungstestimpulses in dem elektrischen Ansteuersignal zu bestimmen.

6. Testsystem (200) nach einem der vorhergehenden Ansprüche, wobei der Prozessor (250) dafür ausgelegt ist, einen Positionssignaturwert aus dem gedämpften Resonanzansprechverhalten abzuleiten.

7. Testsystem (200) nach einem der vorhergehenden Ansprüche, das ferner eine Steuerung (260) zum Steuern des Ansteuerns der Schenkelmaschine als Funktion der abgeleiteten Rotorposition umfasst.

8. Schenkelmaschine, die eine Testeinheit nach einem der Ansprüche 1 bis 7 umfasst.

9. Gebrauch eines Testsystems (200) nach einem der Ansprüche 1 bis 7 in einer Schenkelmaschine.

10. Verfahren (400) zum Bestimmen einer Rotorposition in einer Schenkelmaschine, wobei das Verfahren Folgendes umfasst:

- Erzeugen (410) eines Testimpulsbefehls, um einen Spannungstestimpuls an eine Phasenwicklung der Maschine anzulegen,
- Bestimmen (420) eines gedämpften Resonanzansprechverhaltens nach dem Ende des Spannungstestimpulses, wobei in diesem Moment mindestens ein Anschluss einer Phasenwicklung der Maschine entkoppelt wird, wobei der Einfluss des Energieaustauschs zwischen einer Schenkelmaschineninduktivität und einer parasitären Kapazität (312) der Schenkelmaschine und Spannungstestimpuls-Generatorkomponenten auf das gedämpfte Resonanzansprechverhalten berücksichtigt wird, und

- Ableiten (430) einer Position eines Rotors der Schenkelmaschine aus dem gedämpften Resonanzansprechverhalten.

11. Verfahren (400) nach Anspruch 10, wobei das Ableiten einer Position eines Rotors Folgendes umfasst:

- Bestimmen eines Positionssignaturwerts aus dem gedämpften Resonanzansprechverhalten und
- Ableiten einer Position des Rotors aus dem Positionssignaturwert.

12. Verfahren zum Kalibrieren eines Systems nach einem der Ansprüche 1 bis 7, wobei das Verfahren für mehrere Rotorpositionen (452) Folgendes umfasst:

- Erzeugen (454) eines Testimpulsbefehls, um einen Spannungstestimpuls an eine Phasenwicklung der Maschine anzulegen,
- Bestimmen (454) eines gedämpften Resonanzansprechverhaltens nach dem Ende des Spannungstestimpulses, wobei in diesem Moment mindestens ein Anschluss einer Phasenwicklung der Maschine entkoppelt wird, und Ableiten einer Beziehung zwischen dem gedämpften Resonanzansprechverhalten und der bekannten Rotorposition.

13. Verfahren nach Anspruch 12, wobei das Ableiten einer Beziehung Folgendes umfasst:

- Bestimmen eines Positionssignaturwerts aus dem gedämpften Resonanzansprechverhalten und
- Ableiten einer Beziehung zwischen dem Positionssignaturwert und der bekannten Rotorposition.

14. Computerprogrammprodukt zum Ausführen eines Verfahrens nach einem der Ansprüche 10 bis 13, wenn es auf einem Computer ausgeführt wird.

**Revendications**

1. Un système de test (200) pour une machine à pôles saillants (230), le système de test (200) étant adapté de façon à générer une commande d'impulsion de test destinée à appliquer une impulsion de test de tension à un enroulement de phase de la machine (230), le système de test comprenant

un circuit de mesure (240) adapté de façon à déterminer une réponse de résonance amortie à la suite de la fin de l'impulsion de test de tension, auquel moment au moins une borne d'un enroulement de phase de la machine est découplée, et

un processeur (250) adapté de façon à dériver de celle-ci une position d'un rotor de la machine à pôles saillants (230),

où le circuit de mesure est adapté de façon à déterminer l'influence de l'échange d'énergie entre une inductance de machine à pôles saillants et une capacité parasite (312) de machine à pôles saillants et des composants de générateur d'impulsion de test de tension sur la réponse de résonance amortie.

2. Un système de test (200) selon la revendication précédente, où le système de test comprend un générateur de commande d'impulsion de test (210) destiné à générer une commande d'impulsion de test de façon à appliquer une impulsion de test de tension afin de forcer des potentiels d'un enroulement de phase de la machine (230) à des niveaux prédéterminés, le système de test comprenant en outre un générateur d'impulsion de test de tension destiné à générer l'impulsion de test de tension.

3. Un système de test (200) selon la revendication 2, le générateur d'impulsion de test de tension comprenant un onduleur destiné à entraîner la machine à pôles saillants, grâce à quoi les actions de commutation de l'onduleur entraînant la machine à pôles saillants génèrent les impulsions de test de tension.

4. Un système de test (200) selon l'une quelconque des revendications précédentes, où des potentiels dans le système de test sont découplés à la fin de l'impulsion de test de tension de façon à initier la réponse de résonance amortie à l'impulsion de test.

5. Un système de test (200) selon l'une quelconque des revendications précédentes, où le circuit de mesure est adapté de façon à déterminer une réponse de résonance amortie à la suite de la fin de l'impulsion de test de tension dans le signal d'entraînement électrique.

6. Un système de test (200) selon l'une quelconque des revendications précédentes, où le processeur (250) est adapté de façon à dériver une valeur de signature de position à partir de la réponse de résonance amortie.

7. Un système de test (200) selon l'une quelconque des revendications précédentes comprenant en outre un système de commande (260) destiné à commander l'entraînement de la machine à pôles saillants sous la forme d'une fonction de la position de rotor dérivée.

**8.** Une machine à pôles saillants comprenant une unité de test selon l'une quelconque des revendications 1 à 7.

**9.** L'utilisation d'un système de test (200) selon l'une quelconque des revendications 1 à 7 dans une machine à pôles saillants.

**10.** Un procédé (400) de détermination d'une position de rotor dans une machine à pôles saillants, le procédé comprenant

- la génération (410) d'une commande d'impulsion de test destinée à appliquer une impulsion de test de tension à un enroulement de phase de la machine,
- la détermination (420) d'une réponse de résonance amortie à la suite de la fin de l'impulsion de test de tension, auquel moment au moins une borne d'un enroulement de phase de la machine est découplée, afin de prendre en compte l'influence de l'échange d'énergie entre une inductance de machine à pôles saillants et une capacité parasite (312) de machine à pôles saillants et des composants de générateur d'impulsion de test de tension sur la réponse de résonance amortie, et
- la dérivation (430) à partir de la réponse de résonance amortie d'une position d'un rotor de la machine à pôles saillants.

**11.** Un procédé (400) selon la revendication 10, où la dérivation d'une position d'un rotor comprend

- la détermination d'une valeur de signature de position à partir de la réponse de résonance amortie, et
- la dérivation d'une position du rotor à partir de la valeur de signature de position.

**12.** Un procédé de calibrage d'un système selon l'une quelconque des revendications 1 à 7, le procédé comprenant pour une pluralité de positions de rotor (452),

- la génération (454) d'une commande d'impulsion de test destinée à appliquer une impulsion de test de tension à un enroulement de phase de la machine,
- la détermination (454) d'une réponse de résonance amortie à la suite de la fin de l'impulsion de test de tension, auquel moment au moins une borne d'un enroulement de phase de la machine est découplée, et la dérivation d'une relation entre la réponse de résonance amortie et la position de rotor connue.

**13.** Un procédé selon la revendication 12, où la dérivation d'une relation comprend

- la détermination d'une valeur de signature de position à partir de la réponse de résonance amortie, et
- la dérivation d'une relation entre la valeur de signature de position et la position de rotor connue.

**14.** Un programme informatique destiné à, lorsqu'il est exécuté sur un ordinateur, l'exécution d'un procédé selon l'une quelconque des revendications 10 à 13.

**FIG. 1**

**FIG. 2**

FIG. 3

FIG. 4

## FIG. 5

## FIG. 6A

**FIG. 6B**

**FIG. 6C**

**FIG. 6D**

**FIG. 7A**

**FIG. 7B**

**FIG. 8**

400

Providing
calibration input

For plurality of known
rotor positions

452

Applying voltage test
pulse

454

Measuring damped
resonance response to
voltage test pulse and
determining position
signature value

456

450

Generating voltage test
pulse in test phase

410

Measuring damped
resonance response to
voltage test pulse and
determining position
signature value

420

Determining rotor position

430

Controlling salient
machine

440

# FIG. 9

## FIG. 10

## FIG. 11A

**FIG. 11B**

**FIG. 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000083393 A

- DE 10322447